# EUROPÄISCHE PATENTSCHRIFT

(11) **EP 3 470 301 B1**
(45) Veröffentlichungstag und Bekanntmachung des Hinweises auf die Patenterteilung: **27.04.2022**
(21) Anmeldenummer: 18194569.2
(22) Anmeldetag: 14.09.2018
(51) Int. Cl.: B62D 5/00, B62D 5/04, B62D 6/00

(54) **LENKUNGSSTEUERSYSTEM FÜR EIN LENKSYSTEM EINES KRAFTFAHRZEUGES SOWIE VERFAHREN ZUM BETREIBEN EINES LENKUNGSSTEUERSYSTEMS**
STEERING CONTROL SYSTEM FOR A STEERING SYSTEM OF A VEHICLE AND A METHOD FOR OPERATING A STEERING CONTROL SYSTEM
SYSTÈME DE COMMANDE DE DIRECTION POUR UN SYSTÈME DE DIRECTION D'UN VÉHICULE AUTOMOBILE AINSI QU'UN PROCÉDÉ DE FONCTIONNEMENT D'UN SYSTÈME DE COMMANDE DE DIRECTION

(30) Priorität: 12.10.2017 DE 102017218274
(43) Veröffentlichungstag der Anmeldung: 17.04.2019
(73) Patentinhaber: VOLKSWAGEN AKTIENGESELLSCHAFT, 38440 Wolfsburg (DE)
(72) Erfinder: Dobberphul, Timo, 38102 Braunschweig (DE); Davids, Reno, 38102 Braunschweig (DE)

(56) Entgegenhaltungen:
- EP-A1- 3 173 314
- WO-A1-2011/032586
- DE-A1-102012 102 924
- US-A1- 2002 093 298

## Beschreibung

### Technisches Gebiet

Die Erfindung betrifft Lenkungssteuersysteme für Lenksysteme in Kraftfahrzeugen insbesondere Lenkungssteuersysteme zur Steuerung von Lenkeingriffen im Einsatz bei einem autonomen Fahrbetrieb.

### Technischer Hintergrund

Kraftfahrzeuge können mit einer autonomen Fahrfunktion ausgestattet werden, die eine selbständige Fahrt des Kraftfahrzeugs ermöglicht, ohne dass ein Fahrer Lenkeingriffe durch eine Lenkradbetätigung oder vortriebsrelevante Eingriffe, wie z.B. Betätigen eines Fahrpedals oder eines Bremspedals, durchführen muss. Ein wesentlicher Teil der autonomen Fahrfunktion ist dabei die Vorgabe von Lenkeingriffsgrößen an ein Lenkungssteuersystem, so dass das Lenkungssteuersystem einen Lenkeingriff entsprechend der vorgegebenen Lenkeingriffsgröße in ordnungsgemäßer Weise umsetzt.

Beim Auftreten eines Fehlers im autonomen Fahrbetrieb oder bei einer geforderten Deaktivierung des autonomen Fahrbetriebs muss entweder genügend Zeit für eine Übernahme durch einen Fahrer überbrückt werden oder das Fahrzeug muss in der Lage sein, selbsttätig am Straßenrand zum Stehen zu kommen. Lenkungssteuersysteme, die für den autonomen Fahrbetrieb ausgelegt werden müssen daher in hohem Maße ausfallsicher ausgelegt werden.

Es ist unzureichend, das Lenkungssteuergerät mit redundanten Recheneinheiten auszuführen, da bei Auftreten einer Fehlfunktion der Wirkmechanismus der fehlerhaften Recheneinheit getrennt werden muss, um keinen fehlerhaften Lenkeingriff auszulösen. Daher sind Maßnahmen notwendig, den Wirkmechanismus der fehlerbehafteten Recheneinheit zu entkoppeln, wie z.B. durch das Auftrennen der Spannungsversorgung. Diese Maßnahme darf jedoch keine Entkopplung einer nur vermeintlich fehlerbehafteten Recheneinheit durchführen, da ansonsten eine korrekt funktionierende Recheneinheit fehlerhaft entkoppelt werden könnte. Die Druckschrift DE 103 28 707 A1 offenbart einen Fail-Silent-Datenbus in einem Bremssystem eines Kraftfahrzeugs mit zwischen jeweils zwei oder mehreren Busknoten ablaufender Datenkommunikation auf zwei parallelen Datenleitungen und mit einem Bustreiber für jede Datenleitung. Eine Steuereinrichtung steuert den Buszugriff. Eine Redundanz in der Sensor- oder Rechenfunktion wird dadurch erreicht, dass das ganze Steuergerät dupliziert wird.

Die Druckschrift DE 10 2014 013 756 B3 offenbart eine elektrische Ausrüstung eines Fahrzeugs mit einer wenigstens teilweise elektrischen Brems- und Lenkeinrichtung. Eine Fehlertoleranz bei einem Ausfall einer Lenksystemkomponente wird dadurch verbessert, dass versucht wird, die ausgefallene Lenkwirkung der betreffenden Lenksystemkomponente durch Erzeugung eines Giermoments mittels gezielten Bremsens einzelner Räder wenigstens teilweise zu ersetzen. Um die Ausfallsicherheit weiter zu erhöhen, ist die Stromversorgung der kombinierten Brems- und Lenkeinrichtung in Form einer weiteren Fahrzeugbatterie redundant ausgeführt.

Die Druckschrift WO 2014/131645 offenbart eine Bremsanlage, mit der die Sicherheitsanforderungen des autonomen Fahrens erfüllt werden. Bei Auftreten eines Fehlers soll auch ohne Betätigung des Bremspedals durch den Fahrer eine Bremsung möglich sein. Dazu sind eine erste und eine zweite Steuer-und Regeleinheit zur Steuerung von autonomen Fahrfunktionen vorgesehen. Mithilfe einer dritten Steuer- und Regeleinheit kann die Aufgabenverteilung der ersten und der zweiten elektronischen Steuer- und Regeleinheit gesteuert werden.

Die Druckschrift US2002/0093298A1 ist als nächstliegender Stand der Technik zu sehen und offenbart eine elektromechanische Stelleinrichtung zur Umsetzung eines elektrischen Stellsignales in einen mechanischen Ausgangsstellwert für die Anwendung in Fahrzeugen, mit zwei voneinander unabhängigen Regelkreisen A/B, jeweils bestehend aus mindestens einer Steuerung und mindestens einem von dieser Steuerung angesteuerten elektrischen Motor, der jeweils über ein selbsthemmendes Getriebe in ein Summierungsgetriebe eintreibt, welches die Stellwerte der Stellmotoren zum Ausgangsstellwert überlagert. Eine zusätzliche Vergleicher-Steuerung ist vorgesehen ist, welche die Funktionen der Regelkreise kontrolliert und Schnittstellen zwischen den Steuerungen sowie zwischen den Teilsystemen vorgesehen sind, deren elektrische Potentiale strikt voneinander getrennt sind. Bei einem Fehler oder Ausfall der Vergleicher-Steuerung erfolgt eine Freigabe so, dass bei Öffnung bzw. Unterbrechung eines Regelkreises zwangsläufig der andere Regelkreis die Stellfunktion ausführen kann. Damit ist sichergestellt, dass auch bei defekter Vergleicher-Steuerung mindestens ein Regelkreis den Ausgangswert einregelt.

Die Druckschrift WO2011032586A1 offenbart ein Verfahren zur Steuerung eines Bediensystems eines Fahrzeugs mittels einer Bedienvorrichtung, insbesondere eines Lenksystems. Diese ist redundant vorgesehen und weist einen Aktor-Servomotor mit einem Positionsgeber und eine Servo-Steuereinheit auf. Die Bedienvorrichtung weist ein Bedienelement auf und ist zur Erfassung einer aufgebrachten Kraft und ihrer Richtung ausgebildet. Bei dem Verfahren wird die aufgebrachte Kraft F und ihre Richtung erfasst und in einem ersten Regelkreis als Führungsgröße zur Positionsregelung an eine Servo-Steuereinheit weitergeleitet, wobei von dieser die Soll-Position als Stellgröße für den Aktor-Servomotor ermittelt wird und der zugehöriger Aktor-Servomotor diese Soll-Position anfährt.

Die Druckschrift EP 3 173 314 A1 offenbart ein Lenkungssteuersystem mit mehreren redundanten Recheneinheiten zum Bereitstellen einer Stellgröße für einen Lenkeingriff.

Die Druckschrift DE 10 2012 102 924 A1 offenbart ein Verfahren zum Betreiben einer Hilfskraftlenkung, bei dem mit einer elektronischen Recheneinheit ein Motormoment berechnet und durch eine geeignete Motoransteuerung eingestellt wird, wobei eine Plausibilisierung des berechneten Motormoments in Abhängigkeit eines Handmoments und eines Motormoments durchgeführt wird. Es wird eine Strategie zur Behandlung von Fehlern festgelegt, wobei in Abhängigkeit der zeitlichen Dauer der Fehler das zulässige Motormoment mit Hilfe einer Funktion über der Zeit reduziert wird. Es wird eine obere Motormoment-Grenzkurve und eine untere Motormoment-Grenzkurve vorgegeben, um das berechnete Motormoment zu plausibilisieren.

Es ist eine Aufgabe der vorliegenden Erfindung, ein Lenkungssteuersystem zur Verfügung zu stellen, bei der ein Einzelfehler in einer der Recheneinheiten nicht zu einer fehlerhaften Umsetzung des Lenkeingriffs durch eine autonome Lenkfunktion führt. Insbesondere soll das Lenkungssteuersystem mit möglichst geringem Aufwand implementiert werden.

### Offenbarung der Erfindung

Diese Aufgabe wird durch das Lenkungssteuersystem für ein Lenksystem eines Kraftfahrzeugs gemäß Anspruch 1 sowie durch das Lenksystem, das Kraftfahrzeug und das Verfahren zum Betreiben eines Lenksystems gemäß den nebengeordneten Ansprüchen gelöst.

Weitere Ausgestaltungen sind in den abhängigen Ansprüchen angegeben.

Gemäß einem ersten Aspekt ist ein Lenkungssteuersystem zum Betreiben eines Lenksystems für ein Kraftfahrzeug gemäß einer Lenkeingriffsvorgabe durch Bereitstellen einer Lenkeingriffsgröße vorgesehen, umfassend:
- mehrere Recheneinheiten, die jeweils zum Berechnen einer Stellgröße gemäß einem vorgegebenen Berechnungsalgorithmus abhängig von der Lenkeingriffsvorgabe und einer oder mehreren Betriebszustandsgrößen ausgebildet sind; und
- eine Umschalteinrichtung, um dem Lenksystem immer eine der Stellgrößen der Recheneinheiten als die Lenkeingriffsgröße bereitzustellen; und
- eine Überwachungseinrichtung, die ausgebildet ist, um die Funktionsfähigkeit der mehreren Recheneinheiten zu überprüfen, wobei die Umschalteinrichtung abhängig von dem Ergebnis der Überprüfung angesteuert wird,
wobei die Überwachungseinrichtung ausgebildet ist, die Funktionsfähigkeit der mehreren Recheneinheiten zu überprüfen, indem die Plausibilität der von den Recheneinheiten berechneten Stellgrößen überprüft wird und indem überprüft wird, ob die jeweilige Stellgröße einen vorgegebenen Maximalwert überschreitet oder außerhalb eines Zulässigkeitsbereichs liegt, wobei der Maximalwert bzw. der Zulässigkeitsbereich abhängig von der einen oder den mehreren Betriebszustandsgrößen und/oder der Lenkeingriffsvorgabe bestimmt sind.

Weiterhin kann die Überwachungseinrichtung so ausgebildet sein, um als Lenkeingriffsgröße die Stellgröße derjenigen Recheneinheit bzw. einer der Recheneinheiten bereitzustellen, für die das Überprüfen der Funktionsfähigkeit keinen Fehler ergeben hat.

Eine Idee des obigen Lenkungssteuersystems besteht darin, eine Lenkeingriffsvorgabe einer autonomen Fahrfunktion in redundanten Recheneinheiten parallel zu verarbeiten. Diese Recheneinheiten stellen entsprechende Stellgrößen für einen Lenkantrieb des Lenksystems bereit, um einen von einer autonomen Fahrfunktion vorgegebenen Lenkeingriff auszuführen. Weiterhin ist eine Überwachungseinrichtung vorgesehen, die ausgebildet ist, um eine Umschalteinrichtung anzusteuern, um immer eine der Stellgrößen der Recheneinheiten als die relevante Lenkeingriffsgröße dem Lenksystem bereitzustellen, um den vorgegebenen Lenkeingriff für die autonome Fahrfunktion umzusetzen.

Die Überwachungseinrichtung überprüft die ordnungsgemäße Funktion der mehreren Recheneinheiten und wählt immer eine der Recheneinheiten bzw. diejenige Recheneinheit zur Bereitstellung der entsprechenden Stellgröße als Lenkeingriffsgröße an das Lenksystem aus, für die keine Fehlfunktion festgestellt worden ist. Es ist wesentlich, dass die Überwachungseinrichtung lediglich zwischen den mehreren Recheneinheiten umschalten kann, sodass immer eine der Stellgrößen der Recheneinheiten dem Lenksystem zur Verfügung gestellt wird, kann ein Unterbrechen des Wirkmechanismus, d.h. ein Unterbinden des Bereitstellens aller Stellgrößen an das Lenksystem ausgeschlossen werden.

Die Überwachungseinrichtung überwacht die Recheneinheiten auf offensichtliche Berechnungsfehler, um entsprechende Fehler in den Recheneinheiten zu erkennen. Da die Überwachungseinrichtung lediglich Berechnungsfehler in den Recheneinheiten detektieren muss, können die darin realisierten Überwachungsfunktionen mit einer deutlich geringeren Komplexität aufgebaut werden, so dass es ausreicht, dass lediglich zwei funktionsfähige Recheneinheiten die autonome Fahrfunktion redundant ausführen.

Mit dieser Architektur kann ausgeschlossen werden, dass eine einfache (einzelne) Fehlfunktion in einer der Komponenten (Recheneinheiten, Überwachungseinrichtung, Umschalteinrichtung) des Lenkungssteuersystems die ordnungsgemäße Umsetzung der Lenkeingriffsvorgabe in eine Lenkeingriffsgröße in dem Lenksystem nicht beeinträchtigt. Tritt beispielsweise ein Fehler in einer der Recheneinheiten auf, so erkennt dies die Überwachungseinrichtung und schaltet die Umschalteinrichtung so, dass die Stellgröße eine der übrigen oder der anderen Recheneinheit als Lenkeingriffsgröße zum Ansteuern des Lenksystems bereitgestellt wird.

Tritt ein Fehler in der Überwachungseinrichtung auf, kann dies lediglich dazu führen, dass die Umschalteinrichtung auf der eingestellten Schaltposition verbleibt oder umschaltet, um die Stellgröße einer (funktionsfähigen) anderen der Recheneinheiten an das Lenksystem bereitzustellen. Auch wenn die Umschalteinrichtung defekt ist und nicht mehr auf die Ansteuerung der Überwachungseinrichtung reagiert, so wird dennoch die Stellgröße einer ordnungsgemäß funktionierenden Recheneinheit als Lenkeingriffsgröße an das Lenksystem weitergegeben, da die Umschalteinrichtung lediglich zwischen den Ausgängen der Recheneinheiten umschalten kann und keine Abschaltung vornehmen kann. Insgesamt ermöglicht das obige Lenkungssteuersystem, dass ein Einzelfehler nicht zu einem Ausfall der Umsetzung der Lenkeingriffsvorgabe z.B. von einer autonomen Fahrfunktion führt.

Es kann vorgesehen sein, dass die Berechnungsalgorithmen der Recheneinheiten diversitär entwickelt sind, so dass die Berechnungsalgorithmen in unterschiedlichen Softwarecodes implementiert sind, aber insbesondere gleiche Berechnungsfunktionen realisieren.

Weiterhin kann die Überwachungseinrichtung eine geringere Hardwarekomplexität aufweisen als die Recheneinheiten.

Gemäß einem weiteren Aspekt ist ein Lenksystem mit dem obigen Lenkungssteuersystem zum Bereitstellen einer Lenkeingriffsgröße und mit einem Lenkantrieb zum Bewirken einer Lenkeingriffskraft oder einem Lenkeingriffsmoment abhängig von der Lenkeingriffsgröße vorgesehen.

Gemäß einem weiteren Aspekt ist ein Verfahren zum Betreiben eines Lenkungssteuersystems für ein Lenksystem vorgesehen, wobei das Lenkungssteuersystem mehrere Recheneinheiten umfasst, die jeweils zum Berechnen einer Stellgröße gemäß einem vorgegebenen Berechnungsalgorithmus abhängig von der Lenkeingriffsvorgabe und einer oder mehreren Betriebszustandsgrößen ausgebildet sind, wobei immer genau eine der Stellgrößen als Lenkeingriffsgröße an einen Lenkantrieb des Lenksystems bereitgestellt wird; mit folgenden Schritten:
- Überprüfen der Funktionsfähigkeit der mehreren Recheneinheiten, indem die Plausibilität der von den Recheneinheiten berechneten Stellgrößen überprüft wird und indem überprüft wird, ob die jeweilige Stellgröße einen vorgegebenen Maximalwert überschreitet oder außerhalb eines Zulässigkeitsbereichs liegt, wobei der Maximalwert bzw. der Zulässigkeitsbereich abhängig von der einen oder den mehreren Betriebszustandsgrößen und/oder der Lenkeingriffsvorgabe bestimmt sind;
- abhängig vom Ergebnis der Überprüfung, Bereitstellen eine der Stellgrößen der Recheneinheiten als die Lenkeingriffsgröße an das Lenksystem.

### Kurzbeschreibung der Zeichnungen

Ausführungsformen werden nachfolgend anhand der beigefügten Zeichnungen näher erläutert. Es zeigen:
- Figur 1: ein Lenksystem für ein Kraftfahrzeug mit einem Lenkungssteuersystem;
- Figur 2: eine detailliertere Darstellung des Aufbaus des Lenkungssteuersystems zur Verwendung in einem Lenksystem; und
- Figur 3: ein Flussdiagramm zur Veranschaulichung eines Verfahrens zum Betreiben des Lenkungssteuersystems durch die Überwachungseinrichtung.

### Beschreibung von Ausführungsformen

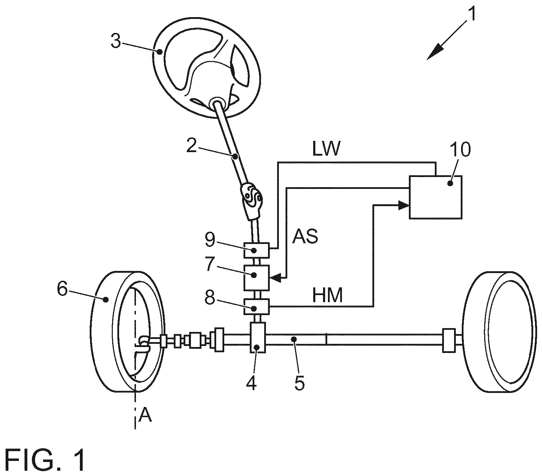

Figur 1 zeigt eine schematische Darstellung eines Lenksystems 1 eines Kraftfahrzeugs. Das Lenksystem 1 umfasst eine Lenksäule 2, die mit einem Lenkrad 3 gekoppelt ist, so dass eine Lenkbewegung, die von einem Fahrer auf das Lenkrad 3 ausgeübt wird, als Handmoment auf die Lenksäule 2 wirkt. Die Lenksäule 2 überträgt das Handmoment auf ein Ritzel 4, das mit einer Zahnstange 5 gekoppelt ist.

Die Zahnstange 5 ist zwischen zwei gelenkten Rädern 6 des Kraftfahrzeugs angeordnet. Die Räder 6 sind so gehalten, dass sie bei einer linearen Bewegung der Lenkstange 5 um eine Schwenkachse verschwenkt werden.

Die Lenksäule 2 oder die Zahnstange 5 ist weiterhin mit einem Lenkantrieb 7 gekoppelt, um einen Lenkeingriff bereitzustellen. Der Lenkeingriff kann einem Lenkeingriffsmoment, das auf die Lenksäule 2 wirkt, oder einer Lenkeingriffskraft auf die Zahnstange 5 entsprechen. Im vorliegenden, in Figur 1 gezeigten Ausführungsbeispiel wirkt der Lenkantrieb 7 auf die Zahnstange 5.

Es ist weiterhin ein Lenkungssteuersystem 10 vorgesehen, das zur Steuerung des Lenksystems 1 und zur Umsetzung einer Lenkeingriffsvorgabe LV ausgebildet ist. Mithilfe eines Drehmomentsensors 8 an der Lenksäule 2 kann ein über das Lenkrad 3 auf die Lenksäule 2 aufgebrachtes Handmoment bestimmt und eine entsprechende Handmomentangabe HM an das Lenksteuersystem 10 übermittelt werden. Entsprechend kann die Lenksäule 2 mit einem Lenkwinkelsensor 9 versehen sein, der einen Drehwinkel der Lenksäule 2 erfasst und eine entsprechende Lenkwinkelangabe LW an das Lenkungssteuersystem 10 bereitstellt. Anstelle oder zusätzlich zum Lenkwinkelsensor 9 kann ein Lagewinkelsensor vorgesehen sein, der eine exakte Rotorlage eines Lenkunterstützungsmotors des Lenkantriebs 7 bestimmt.

Das Lenkungssteuersystem 10 realisiert eine Vielzahl von Lenkfunktionen, die über eine Ansteuerung des Lenkantriebs 7 in das Lenksystem 1 und den Lenkvorgang eingreifen. Derartige Lenkfunktionen können u.a. eine Fahrbahnrückmeldungsoptimierung, eine Schiefziehkompensation, eine Blockiererkennung, eine Anpassung des Lenkgefühls beim Über-/Untersteuern, eine zahnstangenkraftabhängige Lenkunterstützung, eine Unterstützungskraftregelung und eine optimierte aktive Rückstellung umfassen. Weiterhin kann das Lenkungssteuersystem 10 ausgebildet sein, die Lenkeingriffsvorgabe LV z.B. von einer autonomen Fahrfunktion zu empfangen und entsprechend einem Berechnungsalgorithmus in eine Lenkeingriffsgröße AS zur Ansteuerung des Lenkantriebs 7 des Lenksystems 1 umzusetzen.

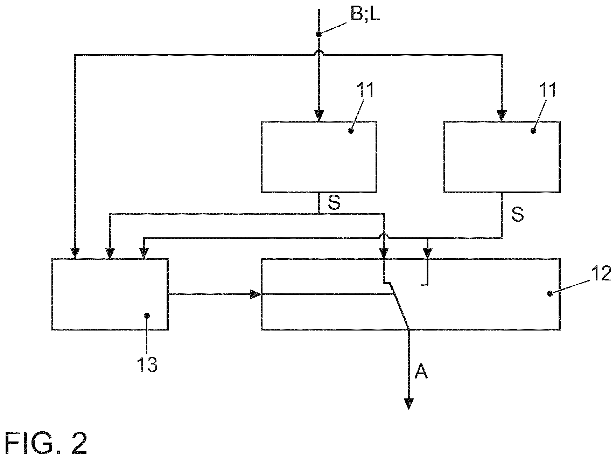

Das Lenkungssteuersystem 10 weist eine Konfiguration auf, wie sie in Figur 2 schematisch dargestellt ist. Das Lenkungssteuersystem 10 der Figur 2 weist beispielhaft zwei gleiche oder vergleichbare Recheneinheiten 11 auf. Es können auch mehr als zwei Recheneinheiten 11 vorgesehen sein. Den Recheneinheiten 11 werden Betriebszustandsgrößen B und eine Lenkeingriffsvorgabe LV zugeführt, um eine Stellgröße zu ermitteln, die geeignet ist als Lenkeingriffsgröße AS zur Ansteuerung des Lenkantriebs 7 verwendet zu werden. Die Lenkeingriffsvorgabe LV kann einer Vorgabe einer autonomen Lenkfunktion entsprechen und insbesondere einem Lenkwinkel oder einem Lenkmoment entsprechen.

Die Betriebszustandsgrößen B für die Berechnung der Stellgröße S können eine Angabe zur Fahrbahnbeschaffenheit, eine Zahnstangenkraft, eine Umgebungstemperatur, eine Fahrzeuggeschwindigkeit und dergleichen umfassen.

Aus den Betriebszustandsgrößen B und der Lenkeingriffsvorgabe LV ermitteln die Recheneinheiten 11 im Wesentlichen durch parallele Berechnung jeweils eine entsprechende Stellgröße S, die jeweils für die Ansteuerung des Lenksystems 1 als Lenkeingriffsgröße AS geeignet sind. Die Lenkeingriffsgröße AS für das Lenksystem 1 entspricht in der Regel einem Stellmoment für den Lenkantrieb 7, der dort in geeigneter Weise umgesetzt wird. Die in den Recheneinheiten 11 implementierten Lenkfunktionen können identisch oder vorzugsweise diversitär entwickelt/programmiert sein, um systematische Fehler, die auf den gleichen Ursachen beruhen, weitestgehend auszuschließen. D.h. die gleichen Berechnungsfunktionen werden durch unterschiedliche Softwarecodes realisiert.

Die von den Recheneinheiten 11 bereitgestellten Stellgrößen S werden an entsprechende Eingänge einer Umschalteinrichtung 12 angelegt. Die Umschalteinrichtung 12 weist weiterhin einen Steuereingang auf, der durch eine Überwachungseinrichtung 13 angesteuert werden wird. Die Umschalteinrichtung 12 ist so ausgebildet, dass zwingend eine von den Recheneinheiten 11 bereitgestellten Stellgrößen S an einen Ausgang der Umschalteinrichtung 12 als die für das Lenksystem 1 zu verwendende (zur Ansteuerung des Lenkantriebs 7) Lenkeingriffsgröße AS ausgegeben wird.

Die Überwachungseinrichtung 13 ist ausgebildet, um die Berechnung in den Recheneinheiten 11 zu überwachen und bei Auftreten eines offensichtlichen Fehlers die Umschalteinrichtung 12 so anzusteuern, dass die Stellgröße S derjenigen Recheneinheit 11 bzw. einer der Recheneinheiten 11, in denen keine fehlerhafte Berechnung festgestellt worden ist, über die Umschalteinrichtung 12 als Lenkeingriffsgröße AS an das Lenksystem 1 bereitgestellt wird.

Die in den Recheneinheiten 11 implementierten Berechnungsfunktionen können Regelungsfunktionen, Adaptionsfunktionen und dergleichen umfassen und fahrzeugindividuell oder entsprechend dem Fahrzeugtyp parametriert sein. Dagegen dienen die Überwachungsfunktionen, die in der Überwachungseinrichtung 13 implementiert sind, lediglich dazu, die von den einzelnen Recheneinheiten 11 bereitgestellten Stellgröße S auf Plausibilität zu überwachen. Die Überwachung kann basierend auf einer oder mehrerer der den Recheneinheiten 11 bereitgestellten Betriebszustandsgrößen B und der Lenkeingriffsvorgabe LV durchgeführt werden, so dass ein Fehler erkannt wird, wenn das Berechnungsergebnis in Form der jeweiligen Stellgröße S bezüglich der zugeführten Betriebszustandsgrößen B und der Lenkeingriffsvorgabe LV nicht plausibel ist. Durch die Fehlererkennung lediglich basierend auf einer Plausibilitätsprüfung der Überwachungsfunktion kann die Überwachungseinrichtung 13 in einer im Vergleich zu den Recheneinheiten 11 deutlich geringeren Komplexität aufgebaut werden, so dass sich ein über die Redundanz der Recheneinheiten 11 hinaus nur ein geringer zusätzlicher Implementierungsaufwand ergibt.

Beispielsweise kann eine derartige Überwachungsfunktion eine Überprüfung der Stellgrößen S der Recheneinheiten 11 auf Überschreiten eines vorgegebenen Maximalwertes umfassen. Der Maximalwert kann abhängig von den Betriebszustandsgrößen B und der Lenkeingriffsvorgabe LV oder davon unabhängig vorgegeben sein. Ein Fehler wird für diejenige Recheneinheit 11 festgestellt, deren Stellgröße S den vorgegebenen Maximalwert überschreitet. Weiterhin können die Stellgrößen S auch bezüglich eines Zulässigkeitsbereichs, der sich aus den Betriebszustandsgrößen B und der Lenkeingriffsvorgabe LV ergibt, überwacht werden. Ein Fehler wird für diejenige Recheneinheit 11 festgestellt, deren Stellgröße S sich außerhalb des Zulässigkeitsbereichs befindet.

Das obige Lenkungssteuersystem 10 weist ausgehend von einem redundanten Vorsehen der Recheneinheiten 11 nur einen geringen Überschuss an Hardwareaufwand auf, um eine Toleranz gegenüber Einzelfehlern zu ermöglichen. Dadurch wird eine hohe Ausfallsicherheit des gesamten Lenkungssteuersystems 10 erreicht. Grundsätzlich ist die Anzahl der verwendeten Recheneinheiten 11 beliebig, jedoch bietet bereits das Lenkungssteuersystem 10 mit zwei Recheneinheiten 11 eine ausreichende Sicherheit gegenüber Einzelfehlern bei geringstmöglichem Hardwareaufwand.

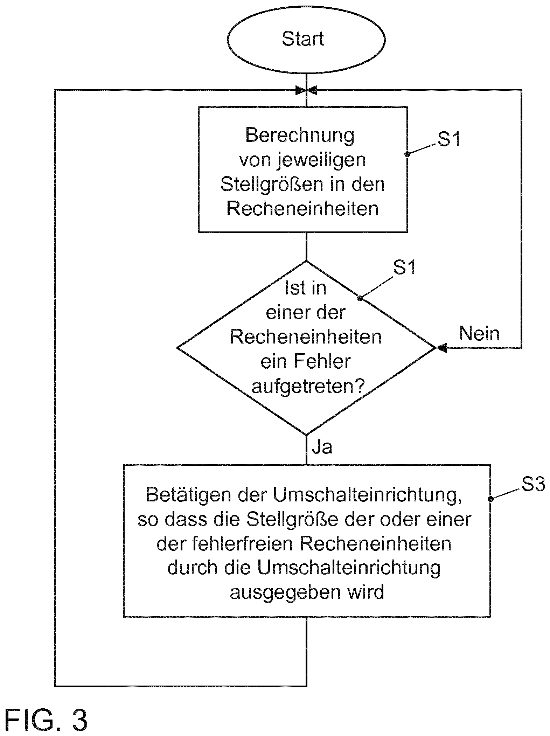

Figur 3 ist ein Flussdiagramm zur Veranschaulichung der Funktion der Überwachungseinrichtung 13, näher dargestellt. In Schritt S1 rechnen die Recheneinheiten 11 im Wesentlichen parallel die Stellgrößen S aus den vorgegebenen Betriebszustandsgrößen B und der Lenkeingriffsvorgabe LV.

In Schritt S2 wird überprüft, ob die von allen Recheneinheiten 11 bereitgestellten Stellgrößen S die Überwachungsbedingungen der Überwachungsfunktion entsprechen. Wird für eine der Recheneinheiten 11 festgestellt, dass die bereitgestellte Stellgröße S nicht den Überwachungsbedingungen entspricht (Alternative: Ja), so wird die Umschalteinrichtung 12 so angesteuert, dass die Stellgröße S der ordnungsgemäß funktionierenden Recheneinheit 11 oder die Stellgröße S einer der übrigen ordnungsgemäß funktionierenden Recheneinheiten 11 an den Ausgang der Umschalteinrichtung 12 als Lenkeingriffsgröße AS ausgeben kann. Andernfalls (Alternative: Nein) wird der Schaltzustand der Umschalteinrichtung 12 nicht verändert und zu Schritt S1 zurückgesprungen.

Mit der obigen Konfiguration des Lenkungssteuersystems 10 kann ausgeschlossen werden, dass eine einfache (einzelne) Fehlfunktion in einer der Komponenten des Lenkungssteuersystems 10 die ordnungsgemäße Umsetzung der Lenkeingriffsvorgabe LV in dem Lenksystem 1 nicht beeinträchtigt. Tritt beispielsweise ein Fehler in einer der Recheneinheiten 11 auf, so erkennt dies die Überwachungseinrichtung 13 und schaltet die Umschalteinrichtung 12 so, dass die Stellgröße S eine der übrigen oder der anderen Recheneinheit 11 als Lenkeingriffsgröße AS zum Ansteuern des Lenksystems 1 bereitgestellt wird. Tritt ein Fehler in der Überwachungseinrichtung 13 auf, kann dies lediglich dazu führen, dass die Umschalteinrichtung 12 auf der eingestellten Schaltposition verbleibt oder umschaltet, um die Stellgröße S einer (funktionsfähigen) anderen der Recheneinheiten 11 an das Lenksystem 1 bereitzustellen. Auch wenn die Umschalteinrichtung 12 defekt ist und nicht mehr auf die Ansteuerung der Überwachungseinrichtung 13 reagiert, so wird dennoch die Stellgröße S einer ordnungsgemäß funktionierenden Recheneinheit 11 als Lenkeingriffsgröße AS an das Lenksystem 1 weitergegeben, da die Umschalteinrichtung 12 lediglich zwischen den Ausgängen der Recheneinheiten 11 umschalten kann und keine Abschaltung vornehmen kann. Insgesamt ermöglicht das obige Lenkungssteuersystem 10, dass ein Einzelfehler nicht zu einem Ausfall der Umsetzung der Lenkeingriffsvorgabe LV z.B. von einer autonomen Fahrfunktion führt.

### Bezugszeichenliste

- 1: Lenksystem
- 2: Lenksäule
- 3: Lenkrad
- 4: Ritzel
- 5: Zahnstange
- 6: gelenkte Räder
- 7: Lenkantrieb
- 8: Drehmomentsensor
- 9: Lenkwinkelsensor
- 10: Lenkungssteuersystem
- 11: Recheneinheit
- 12: Umschalteinrichtung
- 13: Überwachungseinrichtung
- B: Betriebszustandsgröße
- AS: Lenkeingriffsgröße
- LV: Lenkeingriffsvorgabe
- HM: Handmomentenangabe

## Patentansprüche

1. Lenkungssteuersystem (10) zum Betreiben eines Lenksystems (1) für ein Kraftfahrzeug gemäß einer Lenkeingriffsvorgabe (LV) durch Bereitstellen einer Lenkeingriffsgröße (AS), umfassend:
- mehrere Recheneinheiten (11), die jeweils zum redundanten Berechnen einer Stellgröße (S) gemäß einem vorgegebenen Berechnungsalgorithmus abhängig von der Lenkeingriffsvorgabe (LV) und einer oder mehreren Betriebszustandsgrößen (B) ausgebildet sind;
- eine Umschalteinrichtung (12), um dem Lenksystem immer eine der Stellgrößen (S) der Recheneinheiten (11) als die Lenkeingriffsgröße (AS) bereitzustellen; und
- eine Überwachungseinrichtung (13), die ausgebildet ist, um die Funktionsfähigkeit der mehreren Recheneinheiten (11) zu überprüfen, wobei die Umschalteinrichtung (12) abhängig von dem Ergebnis der Überprüfung angesteuert wird,
**dadurch gekennzeichnet, dass**
die Überwachungseinrichtung (13) ausgebildet ist, die Funktionsfähigkeit der mehreren Recheneinheiten (11) zu überprüfen, indem die Plausibilität der von den Recheneinheiten (11) berechneten Stellgrößen (S) überprüft wird und indem überprüft wird, ob die jeweilige Stellgröße (S) einen vorgegebenen Maximalwert überschreitet oder außerhalb eines Zulässigkeitsbereichs liegt, wobei der Maximalwert bzw. der Zulässigkeitsbereich abhängig von der einen oder den mehreren Betriebszustandsgrößen (B) und/oder der Lenkeingriffsvorgabe (LV) bestimmt sind.

2. Lenkungssteuersystem (10) nach Anspruch 1, wobei die Überwachungseinrichtung (13) so ausgebildet ist, um als Lenkeingriffsgröße (AS) die Stellgröße (S) derjenigen Recheneinheit (11) bzw. einer der Recheneinheiten (11), für die das Überprüfen der Funktionsfähigkeit keinen Fehler ergeben hat, bereitzustellen.

3. Lenkungssteuersystem (10) nach Anspruch 1 oder 2, wobei die Berechnungsalgorithmen der Recheneinheiten (11) diversitär entwickelt sind, so dass die Berechnungsalgorithmen in unterschiedlichen Softwarecodes implementiert sind.

4. Lenkungssteuersystem (10) nach einem der Ansprüche 1 bis 3, wobei die Überwachungseinrichtung (13) eine geringere Hardwarekomplexität aufweist als die Recheneinheiten (11).

5. Lenksystem (1) mit einem Lenkungssteuersystem nach einem der Ansprüche 1 bis 4 zum Bereitstellen einer Lenkeingriffsgröße (AS) und mit einem Lenkantrieb (7) zum Bewirken einer Lenkeingriffskraft oder einem Lenkeingriffsmoment abhängig von der Lenkeingriffsgröße (AS).

6. Verfahren zum Betreiben eines Lenkungssteuersystems (10) für ein Lenksystem (1), wobei das Lenkungssteuersystem (10) mehrere Recheneinheiten (11) umfasst, die jeweils zum redundanten Berechnen einer Stellgröße (S) gemäß einem vorgegebenen Berechnungsalgorithmus abhängig von der Lenkeingriffsvorgabe (LV) und einer oder mehreren Betriebszustandsgrößen (B) ausgebildet sind, wobei immer genau eine der Stellgrößen (S) als Lenkeingriffsgröße (AS) an einen Lenkantrieb (7) des Lenksystems (1) bereitgestellt wird; mit folgenden Schritten:
- Überprüfen der Funktionsfähigkeit der mehreren Recheneinheiten (11);
- abhängig vom Ergebnis der Überprüfung, Bereitstellen eine der Stellgrößen (S) der Recheneinheiten (11) als die Lenkeingriffsgröße (AS) an den Lenkantrieb (7),
**dadurch gekennzeichnet, dass**
das Überprüfen der der Funktionsfähigkeit der mehreren Recheneinheiten (11) durchgeführt wird, indem die Plausibilität der von den Recheneinheiten (11) berechneten Stellgrößen (S) überprüft wird und indem überprüft wird, ob die jeweilige Stellgröße (S) einen vorgegebenen Maximalwert überschreitet oder außerhalb eines Zulässigkeitsbereichs liegt, wobei der Maximalwert bzw. der Zulässigkeitsbereich abhängig von der einen oder den mehreren Betriebszustandsgrößen (B) und/oder der Lenkeingriffsvorgabe (LV) bestimmt sind.

## Claims

1. Steering control system (10) for operating a steering system (1) for a motor vehicle in accordance with a steering intervention command (LV) by way of provision of a steering intervention variable (AS), comprising:
- a plurality of computing units (11) which are configured in each case for the redundant calculation of an actuating variable (S) in accordance with a predefined calculation algorithm in a manner which is dependent on the steering intervention command (LV) and one or more operating state variables (B);
- a switchover device (12), in order to always provide one of the actuating variables (S) of the computing units (11) as the steering intervention variable (AS) to the steering system; and
- a monitoring device (13) which is configured so as to check the functional capability of the plurality of computing units (11), the switchover device (12) being actuated in a manner which is dependent on the result of the check,
**characterized in that**
the monitoring device (13) is configured to check the functional capability of the plurality of computing units (11) by the plausibility of the actuating variables (S) which are calculated by the computing units (11) being checked, and by a check being carried out as to whether the respective actuating variable (S) exceeds a predefined maximum value or lies outside a permissible range, the maximum value and the permissible range being determined in a manner which is dependent on the one or the plurality of operating state variables (B) and/or the steering intervention command (LV).

2. Steering control system (10) according to Claim 1, the monitoring device (13) being configured so as to provide, as steering intervention variable (AS), the actuating variable (S) of that computing unit (11) or one of the computing units (11), for which the check of the functional capability has not resulted in an error.

3. Steering control system (10) according to Claim 1 or 2, the calculation algorithms of the computing units (11) being developed in a diverse manner, with the result that the calculation algorithms are implemented in different software codes.

4. Steering control system (10) according to one of Claims 1 to 3, the monitoring device (13) having a lower hardware complexity than the computing units (11).

5. Steering system (1) with a steering control system according to one of Claims 1 to 4 for the provision of a steering intervention variable (AS) and with a steering drive (7) for bringing about a steering intervention force or a steering intervention torque in a manner which is dependent on the steering intervention variable (AS).

6. Method for operating a steering control system (10) for a steering system (1), the steering control system (10) comprising a plurality of computing units (11) which are configured in each case for the redundant calculation of an actuating variable (S) in accordance with a predefined calculation algorithm in a manner which is dependent on the steering intervention command (LV) and one or more operating state variables (B), precisely one of the actuating variables (S) always being provided as steering intervention variable (AS) to a steering drive (7) of the steering system (1); with the following steps:
- checking of the functional capability of the plurality of computing units (11);
- depending on the result of the check, provision of one of the actuating variables (S) of the computing units (11) as the steering intervention variable (AS) to the steering drive (7),
**characterized in that**
the checking of the functional capability of the plurality of computing units (11) is carried out by the plausibility of the actuating variables (S) which are calculated by the computing units (11) being checked, and by a check being carried out as to whether the respective actuating variable (S) exceeds a predefined maximum value or lies outside a permissible range, the maximum value and the permissible range being determined in a manner which is dependent on the one or the plurality of operating state variables (B) and/or the steering intervention command (LV).

## Revendications

1. Système de commande de direction (10) pour faire fonctionner un système de direction (1) pour un véhicule automobile conformément à une spécification d'intervention de direction (LV) par fourniture d'une grandeur d'intervention de direction (AS), comprenant :
- plusieurs unités de calcul (11), lesquelles sont respectivement configurées pour le calcul redondant d'une grandeur de commande (S) conformément à un algorithme de calcul prédéfini en fonction de la spécification d'intervention de direction (LV) et d'une ou plusieurs grandeurs d'état opérationnel (B) ;
- un dispositif d'inversion (12) afin de toujours fournir au système de direction l'une des grandeurs de commande (S) des plusieurs unités de calcul (11) en tant que grandeur d'intervention de direction (AS) ; et
- un dispositif de surveillance (13), qui est configuré pour vérifier l'aptitude fonctionnelle des plusieurs unités de calcul (11), le dispositif d'inversion (12) étant commandé en fonction du résultat de la vérification,
**caractérisé en ce que**
- le dispositif de surveillance (13) est configuré pour vérifier l'aptitude fonctionnelle des plusieurs unités de calcul (11) en vérifiant la plausibilité des grandeurs de commande (S) calculées par les unités de calcul (11) et en vérifiant si la grandeur de commande (S) respective dépasse une valeur maximale prédéfinie ou se trouve en-dehors d'une plage d'admissibilité, la valeur maximale ou la plage d'admissibilité étant déterminée en fonction de l'une ou des plusieurs grandeurs d'état opérationnel (B) et/ou de la spécification d'intervention de direction (LV).

2. Système de commande de direction (10) selon la revendication 1, le dispositif de surveillance (13) étant configuré de manière à fournir, en tant que grandeur d'intervention de direction (AS), la grandeur de commande (S) de l'unité de calcul (11) ou de l'une des unités de calcul (11) pour laquelle la vérification de l'aptitude fonctionnelle n'a produit aucune erreur.

3. Système de commande de direction (10) selon la revendication 1 ou 2, les algorithmes de calcul des unités de calcul (11) étant développés en diversité, de sorte que les algorithmes de calcul sont mis en œuvre dans des codes logiciels différents.

4. Système de commande de direction (10) selon l'une des revendications 1 à 3, le dispositif de surveillance (13) présentant une complexité matérielle plus faible à celle des unités de calcul (11).

5. Système de direction (1) comprenant un système de commande de direction selon l'une des revendications 1 à 4 pour fournir une grandeur d'intervention de direction (AS) et comprenant un mécanisme d'entraînement de direction (7) destiné à produire une force d'intervention de direction ou un moment d'intervention de direction en fonction de la grandeur d'intervention de direction (AS).

6. Procédé pour faire fonctionner un système de commande de direction (10) pour un système de direction (1), le système de commande de direction (10) comprenant plusieurs unités de calcul (11), lesquelles sont respectivement configurées pour le calcul redondant d'une grandeur de commande (S) conformément à un algorithme de calcul prédéfini en fonction de la spécification d'intervention de direction (LV) et d'une ou plusieurs grandeurs d'état opérationnel (B), exactement l'une des grandeurs de commande (S) étant toujours fournie en tant que grandeur d'intervention de direction (AS) à un mécanisme d'entraînement de direction (7) du système de direction (1), comprenant les étapes suivantes :
- la vérification de l'aptitude fonctionnelle des plusieurs unités de calcul (11) ;
- en fonction du résultat de la vérification, la fourniture de l'une des grandeurs de commande (S) des unités de calcul (11) au mécanisme d'entraînement de direction (7) en tant que grandeur d'intervention de direction (AS),
**caractérisé en ce que**
la vérification de l'aptitude fonctionnelle des plusieurs unités de calcul (11) est effectuée en vérifiant la plausibilité des grandeurs de commande (S) calculées par les unités de calcul (11) et en vérifiant si la grandeur de commande (S) respective dépasse une valeur maximale prédéfinie ou se trouve en-dehors d'une plage d'admissibilité, la valeur maximale ou la plage d'admissibilité étant déterminée en fonction de l'une ou des plusieurs grandeurs d'état opérationnel (B) et/ou de la spécification d'intervention de direction (LV).
